# EUROPEAN PATENT APPLICATION

(11) **EP 3 070 566 A1**
(43) Date of publication of application: **21.09.2016**
(21) Application number: 16160581.1
(22) Date of filing: 16.03.2016
(51) Int. Cl.: G05D 16/06

(54) **PRESSURE-REDUCING VALVE**

(30) Priority: 16.03.2015 JP 2015051793
(71) Applicant: Azbil Corporation, Chiyoda-ku Tokyo 100-6419 (JP)
(72) Inventor: YUZAWA, Satoshi, Tokyo, Tokyo 100-6419 (JP)
(74) Representative: Lavoix

(57) **Abstract**

An inner peripheral wall that fits slideably into an outer peripheral surface of an end portion of a supply air port member that is positioned on an output chamber side, and an exhaust introduction flow path for achieving a connection between the opening portion and the output chamber when the opening portion of the exhaust port a that faces the output chamber side is opened by a second valve unit of a poppet valve, are provided in an exhaust port member. Through this, the crosswise position of the exhaust port member (the crosswise position of the exhaust port) is constrained by the supply air port member, making it possible to control the self-induced vibration of the diaphragm without increasing the size of the poppet valve. Moreover, an adequate exhaust flow from the exhaust port is secured through the exhaust introduction flow path, enabling pressure adjustments to be carried out smoothly.

## Description

### Field of Technology

The present invention relates to a pressure-reducing valve for reducing the pressure of a pressurized fluid, and, in particular, relates to a diaphragm-type pressure-reducing valve.

### Background

Conventionally, in systems, known as processing systems, such as chemical plants, electric power plants, and the like, control is through instruments that are driven through the pressure of a fluid such as, for example, air, instead of electricity, in order to prevent explosions. With pressurized fluid supplied to the instruments, if the pressure is too high, may cause malfunctions or faults, and thus the pressure is reduced through a pressure-reducing valve. One type of pressure-reducing valve is a diaphragm-type pressure-reducing valve (referencing, for example, Japanese Unexamined Patent Application Publication 2000-120896).

A diaphragm-type pressure-reducing valve is provided with a first ON/OFF valve that connects or isolates an input chamber and an output chamber, and a second ON/OFF valve that connects or isolates the output chamber and an exhaust chamber, where this first ON/OFF valve and second ON/OFF valve carry out opposite operations alternatingly. Through this, the pressurized fluid that enters into the output chamber from the input chamber is depressurized, and the pressurized fluid that enters into the exhaust chamber passes through an exhaust hole to be expelled to the outside of the pressure-reducing valve.

In this diaphragm-type pressure-reducing valve, the first ON/OFF valve is structured from a supply air port that is formed as a through hole for connecting the input chamber and the output chamber, and a first valve unit that opens and closes an opening portion of the input chamber side of the supply air support, where the second ON/OFF valve is structured from an exhaust port that is formed as a through hole for connecting the output chamber and the exhaust chamber, and a second valve unit for opening/closing the opening portion at the output chamber side of the exhaust port.

The supply air port that structures the first ON/OFF valve is structured in a supply air port member that is provided in a partitioning wall that divides the input chamber and the output chamber, and the exhaust port that structures the second ON/OFF valve is structured in an exhaust port member that is bonded to a diaphragm that separates the output chamber and the exhaust chamber. Moreover, the first valve unit that structures the first ON/OFF valve and the second valve unit that structures the second ON/OFF valve are structured at one end and the other end of a poppet valve.

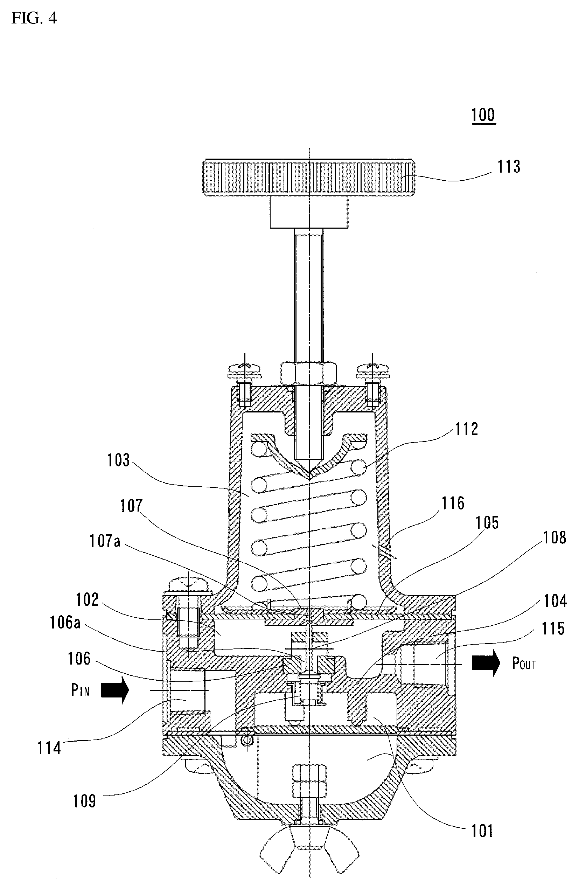

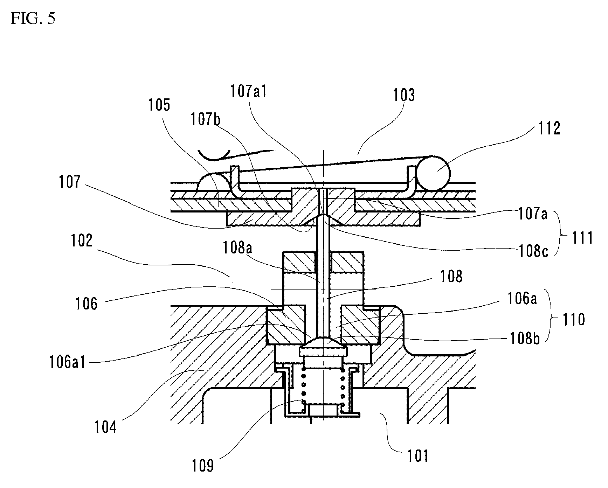

One example of a conventional diaphragm-type pressure-reducing valve is illustrated in FIG. 4. An enlarged view of the critical portions in FIG. 4 is presented in FIG. 5. In FIG. 4 and FIG. 5, 101is an input chamber, 102 is an output chamber, 103 is an exhaust chamber, 104 is a partitioning wall for separating the input chamber 101 and the output chamber 102, 105 is a diaphragm for separating the output chamber 102 and the exhaust chamber 103, 106 is a supply air port member that is provided in the partitioning wall 104, 107 is an exhaust port member that is bonded to the diaphragm 105, and 108 is a poppet valve.

A supply air port 106a is formed as a through hole in the supply air port member 106, for connecting the input chamber 101 and the output chamber 102, and an exhaust port 107a is formed as a through hole in the exhaust port member 107 for connecting the output chamber 102 and the exhaust chamber 103.

The poppet valve 108 is structured from a shaft portion (stem) 108a that is inserted into and supported in the supply air port 106a, an umbrella-shaped valve unit (first valve unit) 108b for opening and closing the opening portion 106a1, facing the input chamber 101 side of the supply air port 106a, formed on one end of the shaft portion 108a, and a valve unit (second valve unit) 108c for opening and closing an opening portion 107a1, facing the output chamber 102 side of the exhaust port 107a, formed on the other end of the shaft portion 108a.

The first valve unit 108b of the poppet valve 108 is biased toward the output chamber 102 side by a poppet valve spring 109, and a first ON/OFF valve 110 is structured from the first valve unit 108b and the supply air port 106a, and a second ON/OFF valve 111 is structured from the second valve unit 108c and the exhaust port 107a.

In this pressure-reducing valve 100, the diaphragm 105 is biased toward the output chamber 102 by a pressure-regulating spring 112, where the degree of biasing of the diaphragm 105 by the pressure-regulating spring 112 is adjusted by a pressure-regulating knob 113, to set the pressure of the pressurized fluid that is outputted from the output chamber 102. This pressure that is set is termed the "setpoint pressure."

The diaphragm 105 is positioned so that, when pressed against the output chamber 102 side, the center of the exhaust port 107a matches the shaft line of the poppet valve 108 (the axis of the shaft portion 108a), so that the opening portion 107a1 of the exhaust port 107a is covered by the second valve unit 108c of the poppet valve 108.

When the diaphragm 105 is biased toward the output chamber 102, the second valve unit 108c of the poppet valve 108 closes the opening portion 107a1 on the output chamber 102 side of the exhaust port 107a, and is pushed against the exhaust port member 107 so that the shaft portion 108a of the poppet valve 108 moves toward the input chamber 101, so that the first valve unit 108b of the poppet valve 108 moves away from the opening portion 106a1 of the supply air port 106a.

In this state, that is, in a state wherein the first ON/OFF valve 110 is open and the second ON/OFF valve 111 is closed, when the pressurized fluid from the outside is inputted into the input chamber 101 through the input flow path 114, the inputted pressurized fluid enters into the output chamber 102 through the supply air port 106a, and is outputted to the outside through an output flow path 115.

In this state, when the output pressure POUT rises above the setpoint pressure, the diaphragm 105 moves toward the exhaust chamber 103. Given this, the second valve unit 108c of the poppet valve 108, which is biased toward the opening portion 107a1 of the exhaust port 107a also undergoes movement toward the exhaust chamber 103, where the movement of the shaft portion 108a of the poppet valve 108 accompanying this movement causes the first valve unit 108a of the poppet valve 108 to close the opening portion 106a1 of the supply air port 106a.

When the diaphragm 105 moves further toward the exhaust chamber 103, the second valve unit 108c of the poppet valve 108 moves away from the opening portion 107a1 of the exhaust port 107a. When this state is produced, that is, when the first ON/OFF valve 110 is closed and the second ON/OFF valve 111 is opened, the pressurized fluid within the output chamber 102 passes through the exhaust port 107a to enter into the exhaust chamber 103, and then is discharged to the outside of the pressure-reducing valve 100 through the exhaust hole 116.

Through this, the pressurized fluid within the output chamber 102 is decompressed, so that the diaphragm 105 is biased toward the output chamber 102, to close the second ON/OFF valve 111. This operation is repeated to achieve regulation of pressure within the output chamber 102, resulting in a pressurized fluid that has been decompressed to the setpoint pressure being outputted to the outside from the output chamber 102 through the output flow path 115.

In this pressure-reducing valve 100, the object is to simplify and reduce the weight of the structure, and normally a rubber diaphragm is used for the diaphragm 105, where, in an equalized pressure-regulated state, the force applied by the pressure-regulating spring (the setting spring) 112 will be balanced by the force applied by the pressure of the fluid, through the diaphragm 105.

However, in this pressure-reducing valve 100, the rubber diaphragm 105 produces self-induced vibrations, triggered by a noisy fluid pressure or by variations in the through flow rate. In this case, the state wherein the applied forces are balanced will exhibit oscillating behavior, causing the fluid pressure to be outputted with oscillations, which may have adverse effects on the instruments in the pipe system on the output side.

Typically it is preferable that the rubber diaphragm be thin, but how thin it can be made is more greatly dependent on the limit to which this self-induced vibration can be avoided, rather than the mechanical strength of the diaphragm. Because of this, in practice it is necessary to use a thick rubber material for the diaphragm 105, which becomes an impediment in terms of cost and quality.

Note that as related prior art, there is that wherein the exhaust port is directed to a poppet valve (referencing, for example, Japanese Unexamined Utility Model Registration Application Publication H5-40668, Japanese Unexamined Patent Application Publication H11-311349, and Japanese Unexamined Patent Application Publication 2007-218424). In this related prior art, the exhaust port is constrained so as to not be shifted to the side and not be tilted (that is, the crosswise position of the exhaust port is constrained), in the hopes of effecting a reduction in the self-induced vibration of the diaphragm. However, because the constraint on the crosswise position of the exhaust port is through the poppet valve, this produces problems such as requiring the poppet valve to be somewhat increased in size.

The present invention was created in order to solve such problems, and the object thereof is to provide a pressure-reducing valve able to suppress self-induced vibration of the diaphragm without an increase in the size of the poppet valve.

### Summary

In order to achieve the object set forth above, the present invention is a pressure-reducing valve including a container wherein the interior can be divided, by a partitioning wall, into a first space which will become an input chamber and a second space which will become an output chamber and an exhaust chamber, wherein an input flow path for a pressurized gas into the input chamber and an output flow path for the pressurized gas from the output chamber are formed; a diaphragm, disposed in the second space, for dividing the second space into the output chamber, on the partitioning wall side, and the exhaust chamber; an exhaust port member that is bonded to the diaphragm and wherein a connecting hole for connecting the output chamber and the exhaust chamber is formed as an exhaust port; a first biasing member for biasing the exhaust port member toward the output chamber; a supply air port member, disposed on the partitioning wall opposite of the exhaust port member, having a connecting hole for connecting the input chamber and the output chamber formed as a supply air port; a poppet valve having a shaft portion that is inserted through and supported by the supply air port, a first valve unit, formed on one end of the shaft portion, for opening and closing an opening portion of the supply air port facing the input chamber side, and a second valve unit, formed on the other end of the shaft portion, for opening/closing an opening portion of the exhaust port facing the output chamber side; and a second biasing member for biasing the first valve unit toward the output chamber; wherein: the exhaust port member has: an inner peripheral wall that fits slideably in the outer peripheral surface of the end portion of the supply air port member positioned on the output chamber side; and an exhaust introduction flow path that achieves a connection between the opening portion and the output chamber when an opening portion of the exhaust port that faces the output chamber side is opened by the second valve unit of the poppet valve.

In the present invention, in the exhaust port member that is bonded to the diaphragm, the inner peripheral wall fits slideably into the outer peripheral surface of an end portion that is positioned on the output chamber side of the supply air port member. Through this, the crosswise position of the exhaust port member (the crosswise position of the exhaust port) is constrained by the supply air port member, making it possible to control the self-induced vibration of the diaphragm without increasing the size of the poppet valve. Note that this exhaust port member is provided with an exhaust introduction flow path that achieves a connection between the opening portion and the output chamber when the opening portion that faces the output chamber side of the exhaust port is opened by the second valve unit of the poppet valve, and thus an adequate exhaust flow from the exhaust port is secured, so that pressure adjustments are carried out smoothly.

Given the present invention, an exhaust introduction flow path for achieving a connection between the output chamber and the opening portion that faces the output chamber side of the exhaust port is provided in the exhaust port member, and the inner peripheral wall of the exhaust port member fits slideably in the outer peripheral surface of the end portion of the supply air port member, position on the output chamber side, enabling control of the self-induced vibration of the diaphragm without increasing the size of the poppet valve.

### Brief Descriptions of the Drawings

FIG. 1 is a cross-sectional view illustrating the structure of an example of a pressure-reducing valve according to the present invention.
FIG. 2 is an enlarged view of critical portions in FIG. 1.
FIG. 3 is a diagram illustrating an example wherein the exhaust introduction flow path is provided in another position of the exhaust port member.
FIG. 4 is a structural diagram illustrating an example of a pressure-reducing valve of a conventional diaphragm type.
FIG. 5 is an enlarged view of critical portions in FIG. 4.

### Detailed Description

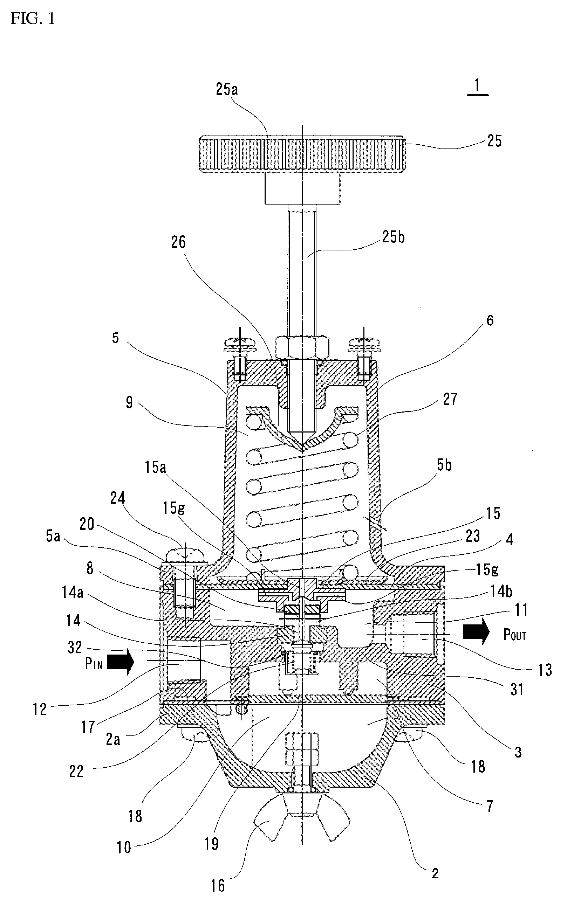

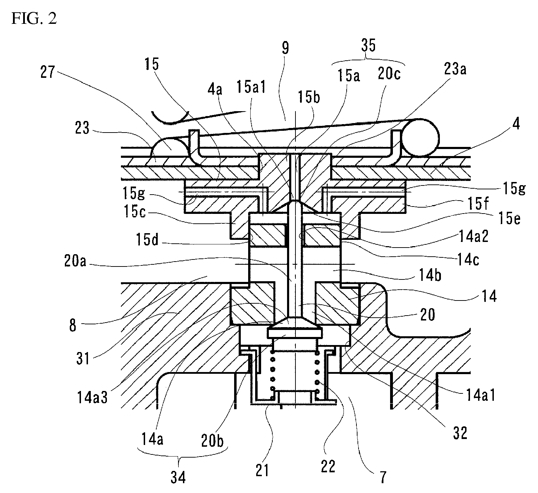

An example according to the present disclosure is explained below in detail, based on the drawings. FIG. 1 is a cross-sectional view illustrating the structure of one embodiment of a pressure-reducing valve according to the present invention, and FIG. 2 is an enlarged view of critical portions in FIG. 1.

The pressure-reducing valve 1 in the present embodiment includes: a closed-bottom cylindrical filter cover 2; a cylindrical center body 3, with a partitioning wall 31 formed in the interior thereof, disposed on the filter cover 2; a diaphragm 4 that is disposed on top of the center body 3 so as to cover an upper opening of the center body 3; and a closed-top cylindrical bonnet 5 that is disposed on top of the diaphragm 4, where a container 6 is structured from the filter cover 2, the center body 3, and the bonnet 5.

Within this container 6, a first space 10, for forming an input chamber 7, and a second space 11, for forming an output chamber 8 and an exhaust chamber 9, are separated by a partitioning wall 31. The input chamber 7 is formed between the filter cover 2 and the partitioning wall 31, where the output chamber 8 is formed between the partitioning wall 31 and the diaphragm 4, and the exhaust chamber 9 is formed between the diaphragm 4 and the bonnet 5.

The filter cover 2 is a closed-bottom cylindrical member, formed from, for example, aluminum, or the like. A bolt 16 for draining is screwed into the bottom of the filter cover 2.

The filter cover 2, in a state wherein a flange 2a that is formed on the end portion on the ceiling side is in contact with the outer edge portion of the input chamber 7 side of the center body 3, with a gasket 17 interposed therebetween, is secured to the center body 3 through bolts 18 that are inserted through this flange 2a.

A filter 19, made from a sponge, a stainless steel mesh, or the like, for eliminating dust, is provided in the space between the opening of the center body 3 on the filter cover 2 side and the opening of the filter cover 2 on the ceiling side, that is, in the flow path of the pressurized fluid toward the output chamber 8 side within the input chamber 7.

The center body 3 is a cylindrical member, and is formed from, for example, aluminum, or the like. The interior of the center body 3 is divided into two spaces, upper and lower, by a partitioning wall 31. A through hole 32 is formed in the center portion of this partitioning wall 31, and the supply air port member 14 is provided in this through hole 32.

The supply air port member 14 is formed from, for example, brass, and a through hole that passes through this center portion in the vertical direction, is formed as the supply air port 14a. A branch hole 14b for connecting the supply air port 14a to the output chamber 8 is formed, in a direction that is perpendicular to the supply air port 14a, at the center portion of the supply air port 14a. The inner diameter of the top route 14a1 of the supply air port 14a is a large diameter, and the inner diameter of the bottom route 14a2 of the supply air port 14a is a small diameter.

A poppet valve 20 that is made from, for example, brass or stainless steel, is inserted through and supported by the supply air port 14a. This poppet valve 20 is structured from a shaft portion (stem) 20a, an umbrella-shaped valve unit (first valve unit) 20b that is formed on one end of the shaft portion 20a on the input chamber 7 side, and a valve unit (second valve unit) 20c for opening/closing the opening portion 15a1 that faces the output chamber 8 side of the exhaust port 15a, described below, formed on the other end of the shaft portion 20a.

The outer diameter of the shaft portion 20a of the poppet valve 20 is formed so as to be smaller than the inner diameter of the bottom route 14a1 of the supply air port 14a so that the pressurized fluid can flow between the shaft portion 20a and the bottom route 14a1 of the supply air port 14a. Moreover, the outer diameter of the shaft portion 20a of the poppet valve 20 is slightly smaller than the inner diameter of the upper route 14a2 of the supply air port 14a so that the shaft portion 20a can undergo sliding movement with the inner peripheral surface of the top route 14a2 of the supply air port 14a as the guiding surface. Moreover, the outer diameter of the valve unit 20b of the poppet valve 20 is formed so as to be larger than the inner diameter of the opening portion 14a3 so as to close the opening portion 14a3 of the supply air port 14a that faces the input chamber 7 side.

A poppet spring bearing 21 is supported on the bottom end of the through hole 32 at the face of the partitioning wall 31 that is on the input chamber 7 side. A poppet spring 22 is disposed between the poppet spring bearing 21 and the first valve unit 20b of the poppet valve 20. The poppet spring 22 is made from, for example, a coil spring made from stainless steel, and biases the poppet valve 20 toward the output chamber 8. Through this, the second valve unit 20c of the poppet valve 20 protrudes from the top route (the opening portion on the output chamber 8 side) 14a2 of the supply air port 14a.
Moreover, in the center body 3, an input flow path 12 wherein one end is open on the outside face of the center body 3 and the other end is open on the face on the input chamber 7 side, and an output flow path 13, wherein one end is open on the face on the output chamber 8 side and the other hand is open on the outside face of the center body 3, are formed. Moreover, a pipe (not shown) for inputting pressurized fluid from the outside is connected to the opening on the outside face of the center body 3 of the input flow path 12. Moreover, a pipe (not shown) for sending pressurized fluid to the outside is connected to the opening on the outside face of the center body 3 of the output flow path 13.

The diaphragm 4 is a member which, in the plan view, is shaped as an essentially circular film, formed from a material having flexibility such as, for example, nitrile rubber. The diaphragm 4 is formed so that the outer diameter thereof is equal to the outer diameter of the top face of the center body 3. This diaphragm 4 is disposed between the center body 3 and the bonnet 5 in a state wherein the outer edge portions are held between the end portion of the center body 3 on the output chamber 8 side and the opening edge portions of the bonnet 5 on the bottom side. Given this, the diaphragm 4 divides the output chamber 8 and the exhaust chamber 9.

An exhaust port member 15 is bonded to the face of the diaphragm 4 on the output chamber 8 side. This exhaust port member 15 is a disk-shaped member, formed from, for example, brass. The exhaust port member 15 is formed so that the outer diameter thereof is smaller than the outer diameter of the diaphragm 4 and the opening of the center body 3 on the output chamber 8 side.

A circular column-shaped first protruding portion 15b is formed in the center portion of the face on the side of the exhaust port member 15 the contacts the diaphragm 4, where this first protruding portion 15b is inserted into a through hole 4a that is formed in the center portion of the diaphragm 4, and protrudes from the face of the diaphragm 4 on the exhaust chamber 9 side.

Moreover, a cylindrical second protruding portion 15c is formed in the center portion of the face of the exhaust port member 15 on the output chamber 8 side, where the exhaust port member 15 fits slideably into the outer peripheral surface 14c of the end portion of the supply air port member 14 that is positioned on the output chamber 8 side, with the inner peripheral surface (inner peripheral wall) 15d of the second protruding portion 15c as the sliding face.

Moreover, a through hole for connecting the output chamber 8 and the exhaust chamber 9 is formed as the exhaust port 15a in the center portion of the exhaust port member 15, and the peripheral edge portion 15e of the opening portion 15a1 of the exhaust port 15a that faces the output chamber 8 side has a cone shape. Moreover, in the exhaust port member 15, a plurality of connecting holes 15g for connecting the output chamber 8 and the space within the inner wall surface 15d of the second protruding portion 15c are formed in a base portion 15f that is held between the first protruding portion 15b and the second protruding portion 15c. In the below, these connecting holes 15g will be termed the "exhaust introduction flow paths."

An area plate 23 is provided on the face of the diaphragm 4 on the exhaust chamber 9 side. This area plate 23 is a disk-shaped member, and is formed from, for example, brass. The area plate 23 is formed so that the outer diameter thereof is smaller than the outer diameter of the diaphragm 4 and smaller than the bottom opening of the bonnet 5. This area plate 23 is secured to the top face of the diaphragm 4 in a state wherein the protruding portion 15b of the exhaust port member 15 is inserted into a through hole 23a that is formed in the center portion thereof.

The bonnet 5 is a closed-top cylindrical member made from, for example, aluminum. The bonnet 5, in a state wherein a flange 5a that is formed on the bottom end portion of the bonnet 5 is placed on the diaphragm 4, which is placed on the top of the center body 3, is secured to the center body 3, with the diaphragm 4 therebetween, through bolts 24 that are inserted through this flange 5a. An exhaust chamber 9 is formed between the diaphragm 4 and the bonnet 5 thereby. This exhaust chamber 9 is connected to the outside through an exhaust hole 5b that is formed in the side wall of the bonnet 5.

A pressure-regulating knob 25 is screwed into the ceiling of the bonnet 5. This pressure-regulating knob 25 is structured from a knob 25a and a shaft 25b that has one end thereof secured to the knob 25a and the other end thereof positioned within the bonnet 5, where the shaft 25b is screwed into the top of the bonnet 5 with the shaft 25b able to move in the vertical direction.

A pressure-regulating spring bearing 26 that is made from a material such as, for example, steel is disposed within the bonnet 5 in the vicinity of the other end of the shaft 25b of the pressure-regulating knob 25, and a pressure-regulating spring 27 made from, for example, a coil spring that is formed from, for example, spring steel, is disposed between this pressure-regulating spring bearing 26 and the area plate 23 that is secured to the diaphragm 4.

In this pressure-reducing valve 1, a first ON/OFF valve 34 is structured from a first valve unit 20b and a supply air port 14a, and a second ON/OFF valve 35 is structured from a second valve unit 20c and an exhaust port 15a. Moreover, the pressure of the pressurized fluid that is outputted from the output chamber 8 is set through adjusting, using the pressure-regulating knob 25, the degree with which the diaphragm 4 is biased by the pressure-regulating spring 27.

In the pressure-reducing valve 1, when the diaphragm 4 is biased toward the output chamber 8, the exhaust port member 15, wherein the inner peripheral wall 15d is fitted into the outer peripheral surface 14c of the end portion of the supply air port member 14 that is positioned on the output chamber 8 side, slides to the output chamber 8 side, so that the second valve unit 20c of the poppet valve 20 closes the opening portion 15a1 of the exhaust port 15a on the output chamber 8 side, and the shaft portion 20a of the poppet valve 20 moves toward the input chamber 8 so that the first valve unit 20b of the poppet valve 20 moves away from the opening portion 14a1 of the supply air port 14a.

In this state, that is, in a state wherein the first ON/OFF valve 34 is open and the second ON/OFF valve 35 is closed, when the pressurized fluid from the outside is inputted into the input chamber 7 through the input flow path 12, the inputted pressurized fluid enters into the output chamber 8 through the supply air port 14a, and is outputted to the outside through an output flow path 13.

In this state, when the output pressure POUT rises above the setpoint pressure, the diaphragm 4 moves toward the exhaust chamber 9. That is, the exhaust port member 15, wherein the inner peripheral wall 15d is fitted into the outer peripheral surface 14c of the end portion of the supply air port member 14 that is positioned on the output chamber 8 side, slides to the exhaust chamber 9 side.

Given this, the second valve unit 20c of the poppet valve 20, which is biased toward the opening portion 14a1 of the exhaust port 14a also moves toward the exhaust chamber 9, and, through the movement of the shaft portion 20a of the poppet valve 20 accompanying this movement, the first valve unit 20b of the poppet valve 20 covers the opening portion 14a3 of the supply air port 14a.

When the diaphragm 4 moves further toward the exhaust chamber 9, then the second valve unit 20c of the poppet valve 20 moves away from the opening portion 15a1 of the exhaust port 15a. When in this state, that is, when the first ON/OFF valve 34 is closed and the second ON/OFF valve 35 is open, the pressurized fluid within the output chamber 8 passes through the exhaust port 15a to enter into the exhaust chamber 9, to be discharged to the outside of the pressure-reducing valve 1 from the exhaust hole 5b.

That is, when the opening portion 15a1 of the exhaust port 15a is opened by the second valve unit 20c of the poppet valve 20, the opening portion 15a1 and the output chamber 8 are connected by the exhaust introduction flow path 15g that is formed in the exhaust port member 15, so that the pressurized fluid within the output chamber 8 passes through the exhaust port 15a to enter into the exhaust chamber 9, to be discharged to the outside of the pressure-reducing valve 1 from the exhaust hole 5b, to achieve regulation of pressure within the output chamber 8.

In this pressure-reducing valve 1, the inner peripheral wall 15d of the exhaust port member 15 that is bonded to the diaphragm 4 fits slideably into the outer peripheral surface 14c of the end portion of the supply air port member 14 that is positioned on the output chamber 8 side, and thus the crosswise position of the exhaust port member 15 (the crosswise position of the exhaust port 15a) is constrained by the supply air port member 14. This makes it possible to suppress the self-induced vibration of the diaphragm 4 without increasing the size of the poppet valve 20.

Moreover, when the opening portion 15a1 of the exhaust port 15a is opened by the second valve unit 20c of the poppet valve 20, the connection between the opening portion 15a1 of the exhaust port 15a and the output chamber 8 is achieved through the exhaust introduction flow path 15g, to secure an adequate exhaust flow from the exhaust port 15a, to enable the pressure adjustment to be carried out smoothly.

Moreover, because the self-induced vibration of the diaphragm 4 can be suppressed by this pressure-reducing valve 1, the thickness of the diaphragm 4 can be reduced. Reducing the thickness of the rubber diaphragm enables a reduction in cost as well, and also enables the machining tolerance to be tighter, and thus an effect of suppressing the variability in the performance quality caused by assembly can be anticipated as well.

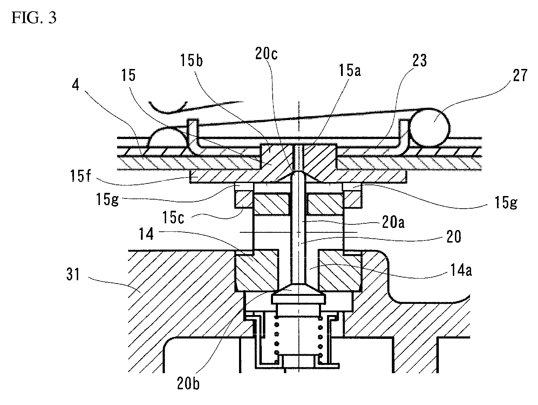

Note that in the embodiment described above, an exhaust introduction flow path 15g is formed in the base portion 15f that is held between the first protruding portion 15b and the second protruding portion 15c of the exhaust port member 15; however, as illustrated in FIG. 3, the exhaust introduction flow path 15g may be formed in a peripheral wall of the second protruding portion 15c instead. This makes it possible to reduce the thickness of the base portion 15f, making it possible to avoid an increase in the vertical dimension of the exhaust port member 15.

Moreover, in the embodiment set forth above, the exhaust introduction flow path 15g that is provided in the exhaust port member 15 may be one or more exhaust introduction flow paths 15g, or the introduction flow path for the exhaust may be secured through having the peripheral wall of the second protruding portion 15c be in the form of a mesh. Moreover, the pressurized fluid that is inputted into, and outputted from, the pressure-reducing valve 1 may be either a liquid or a gas.

Moreover, the pressure-reducing valve according to the present invention may be applied to a valve wherein self-induced vibrations of a diaphragm occur, such as a poppet-type pilot relay that uses a diaphragm, and can be used as a valve positioner or an electro-pneumatic converter. A poppet-type pilot relay that uses a diaphragm has many points in common in the structure within the valve.

While the present disclosure has been explained above in reference to a embodiment, the present disclosure is not limited to the embodiment set forth above. The structures and details in the present disclosure may be varied in a variety of ways, as can be understood by one skilled in the art, within the scope of technology in the present disclosure.

### List of Reference Signs

1: Pressure-Reducing Valve
2: Filter Cover
3: Center Body
4: Diaphragm
5: Bonnet
5b: Exhaust Hole
6: Container
7: Input Chamber
8: Output Chamber
9: Exhaust Chamber
10: First Space
11: Second Space
12: Input Flow Path
13: Output Flow Path
14: Supply Air Port Member
14a: Supply Air Port
14a3: Opening Portion
14b: Branch Hole
14c: Outer Peripheral Surface
15: Exhaust Port Member
15a: Exhaust Port
15a1: Opening Portion
15b: First Protruding Portion
15c: Second Protruding Portion
15d: Inner Peripheral Wall
15f: Base Portion
15g: Exhaust Introduction Flow Path
20: Poppet Valve
20a: Shaft Portion
20b: First Valve Unit
20c: Second Valve Unit
22: Poppet Spring
27: Pressure Regulating Spring
31: Partitioning Wall
34: First ON/OFF Valve
35: Second ON/OFF Valve

## Claims

1. A pressure-reducing valve (1) comprising:
a container (6) wherein the interior is divided, by a partitioning wall, into a first space (10) which becomes an input chamber (7) and a second space (11) which becomes an output chamber (8) and an exhaust chamber (9), wherein an input flow path (12) for a pressurized gas into the input chamber (7) and an output flow path (13) for the pressurized gas from the output chamber (8) are formed;
a diaphragm (4), disposed in the second space (11), for dividing the second space (11) into the output chamber (8), on the partitioning wall side, and the exhaust chamber (9);
an exhaust port member (15) bonded to the diaphragm and wherein a connecting hole connects the output chamber (8) and the exhaust chamber (9) is formed as an exhaust port;
a first biasing member biasing the exhaust port member (15) toward the output chamber (8);
a supply air port member (14), disposed on the partitioning wall opposite of the exhaust port member (15), comprising a connecting hole for connecting the input chamber (7) and the output chamber (8) formed as a supply air port (14a);
a poppet valve (20) comprising a shaft portion (20a) that is inserted through and supported by the supply air port (14a), a first valve unit (20b), formed on one end of the shaft portion (20a), opening and closing an opening portion of the supply air port (14a) facing the input chamber side, and a second valve unit (20c), formed on the other end of the shaft portion (20a), opening/closing an opening portion of the exhaust port facing the output chamber side; and
a second biasing member biasing the first valve unit (20b) toward the output chamber (8); wherein:
the exhaust port member (15) has:
an inner peripheral wall (15d) that fits slidably in the outer peripheral surface of the end portion of the supply air port member (14) positioned on the output chamber side; and
an exhaust introduction flow path (15g) that achieves a connection between the opening portion and the output chamber (8) when an opening portion of the exhaust port that faces the output chamber side is opened by the second valve unit (20c) of the poppet valve (20).
